# EUROPEAN PATENT SPECIFICATION

(11) **EP 1 440 762 B1**
(45) Date of publication and mention of the grant of the patent: **02.11.2006**
(21) Application number: 04075171.1
(22) Date of filing: 20.01.2004
(51) Int. Cl.: B23K 26/14, B23K 26/00

(54) **Laser machining method and laser machining apparatus**
Verfahren und Vorrichtung zur Laserbearbeitung
Dispositif et procédé de traitement au laser

(30) Priority: 21.01.2003 JP 2003012391
(43) Date of publication of application: 28.07.2004
(73) Proprietor: Disco Corporation, Tokyo 143-8580 (JP)
(72) Inventor: Yoshikawa, Toshiyuki c/o Disco Corporation, Tokyo 144-8650 (JP)
(74) Representative: Ryan, Anne Mary

(56) References cited:
- US-A- 3 626 141
- US-A1- 2002 092 836
- US-A1- 2002 130 116

## Description

This invention relates to a laser machining method and a laser machining apparatus which shine a laser beam to a predetermined machining region of a workpiece to machine the workpiece.

### Description of the Prior Art

In a semiconductor device manufacturing process, as is well known among people skilled in the art, a plurality of regions are demarcated by streets (cutting lines) arranged in a lattice pattern on the face of a nearly disk-shaped semiconductor wafer, and a circuit, such as IC or LSI, is in each of the demarcated regions. This semiconductor wafer is cut along the streets to divide it for the respective circuits, thereby producing individual semiconductor chips. Cutting along the streets of the semiconductor wafer is performed normally by a cutting device called a dicer. This cutting device comprises a chuck table for holding the semiconductor wafer which is a workpiece, cutting means for cutting the semiconductor wafer held by the chuck table, and moving means for moving the chuck table and the cutting means relative to each other. The cutting means includes a rotary spindle to be rotated at a high speed, and a cutting blade mounted on the spindle. The cutting blade comprises a disk-shaped base, and an annular cutting edge mounted on an outer peripheral portion of the side surface of the base. The cutting edge comprises, for example, diamond abrasive grains (about 3 µm in particle size) fixed by electroforming, and is formed with a thickness of about 20 µm. When the semiconductor wafer is cut by such a cutting blade, a fracture or crack occurs on the cut surface of the semiconductor chip cut off. Thus, the width of the street is set at about 50 µm in consideration of the influence of the fracture or crack. If the semiconductor chip is downsized, however, the proportion of the street to the semiconductor chip increases to cause a decrease in productivity. Cutting by the cutting blade, moreover, poses the problems that the feed speed is limited, and the semiconductor chips are contaminated with swarf.

In recent times, the following semiconductor wafers have been put to practical use for finer fabrication of circuits such as IC and LSI: Semiconductor wafers in which a low dielectric constant insulator (Low-k film) comprising a film of an inorganic material such as SiOF BSG (SiOB), or a film of an organic material, such as a polyimide-based or parylene-based polymer film, has been laminated on the face of a semiconductor wafer body, such as a silicon wafer; and semiconductor wafers having a metal pattern applied thereto, called a test element group (Teg). The semiconductor wafers having the low dielectric constant insulator (Low-k film) laminated therein involve the problem that when they are cut along the street by a cutting blade, the low dielectric constant insulator peels off. The semiconductor wafers having a metal pattern applied thereto, called the test element group (Teg), present the problem that when they are cut along the street by a cutting blade, burrs occur, because the metal pattern is formed from a tacky metal such as copper.

A machining method, which shines a laser beam along the street of a semiconductor wafer to cut the semiconductor wafer, has also been attempted. This method is disclosed, for example, in Japanese Unexamined Patent Publication No. 1994-120334.

This method of cutting by shining a laser beam is of the type which divides the semiconductor wafer along the street by the laser beam. Thus, this method can resolve the problem of peeling of the low dielectric constant insulator layer, and can also solve the problem of burr occurrence.

However, this method creates the new problem that when a laser beam is shone along the street of the semiconductor wafer, thermal energy concentrates in the shone region to cause debris, which adheres to bonding pads, etc., thereby deteriorating the quality of the semiconductor chip.

U.S. Patent No. 3,626,141 describes an apparatus for scribing semiconductor wafers by using a laser, focusing optics and a drive mechanism for moving the focal spot of the laser beam along a prescribed path on the surface of the wafer. Ejected globules of molten semiconductor material are removed from the area of the cutting operation by blowing a gas under pressure from a nozzle mounted on the end of a conduit across the region of the of the laser focal spot and removing the gas steam and any entrained globules through a conduit attached to a vacuum source.

In the apparatus of U.S. 3,626,141 the gas conduit and the conduit attached to the vacuum source must be mounted very close to the surface of the semiconductor to be effective. Thus, the setting of the position of the conduits is critical and if they are set too close to the surface of the semiconductor damage to that surface may result.

### Summary of the Invention

The object of the present invention is to provide a laser machining method and a laser machining apparatus which can prevent the influence of debris produced upon shining a laser beam to a workpiece.

According to the present invention, for attaining the above object, there is provided a laser machining method for machining a workpiece by shining a laser beam to said workpiece from laser beam shining means, said method comprising the steps of:
a) holding the workpiece in a workpiece holding means;
b) shining the laser beam onto said workpiece;
c) moving the workpiece holding means relative to said laser beam shining means; and
d) ejecting a gas toward a shining position of the laser beam during laser beam shining,
   characterized in that the method comprises the further steps of:
e) ejecting the gas from a first nozzle located downstream from the shining position of the laser beam in the direction of movement of said workpiece holding means during the laser beam shining;
f) reversing the direction of movement of the workpiece holding means; and
g) ejecting a gas from a second nozzle located downstream from the shining position of the laser beam in the reversed direction of movement of said workpiece holding means.

According to the present invention, there is also provided a laser machining apparatus comprising workpiece holding means for holding a workpiece; laser beam shining means for shining a laser beam to said workpiece held by said workpiece holding means, machining feed means for moving said workpiece holding means relative to said laser beam shining means gas ejection means for ejecting a gas toward a shining position of the laser beam during laser beam shining, characterized in that the gas ejection means ejects the gas from a side, which has been machined by the laser beam, in that said gas ejection means is equipped with a pair of gas ejection nozzles for ejecting the gas toward said shining position, the gas ejection nozzles being positioned from sides downstream and upstream from said shining position in a direction of movement of said workpiece holding means, and in that said gas ejection means ejects the gas from one of said gas ejection nozzles, being the gas ejection nozzle located downstream from said shining position in the direction of movement of said workpiece holding means during the laser beam shining.

### Brief Description of the Drawings

FIG. 1 is a perspective view of a laser machining apparatus for performing a laser machining method according to the present invention.
FIG. 2 is a block diagram schematically showing the constitution of a laser, as a laser beam shining means, provided in the laser machining apparatus shown in FIG. 1.
FIGS. 3(a) and 3(b) are explanatory views showing the state of machining by the laser machining apparatus illustrated in FIG. 1.
FIG. 4 is a perspective view of a semiconductor wafer as a workpiece to be machined by the laser machining method according to the present invention.

### Detailed Description of the Preferred Embodiments

The laser machining method and the laser machining apparatus according to the present invention will now be described in greater detail by reference to the accompanying drawings.

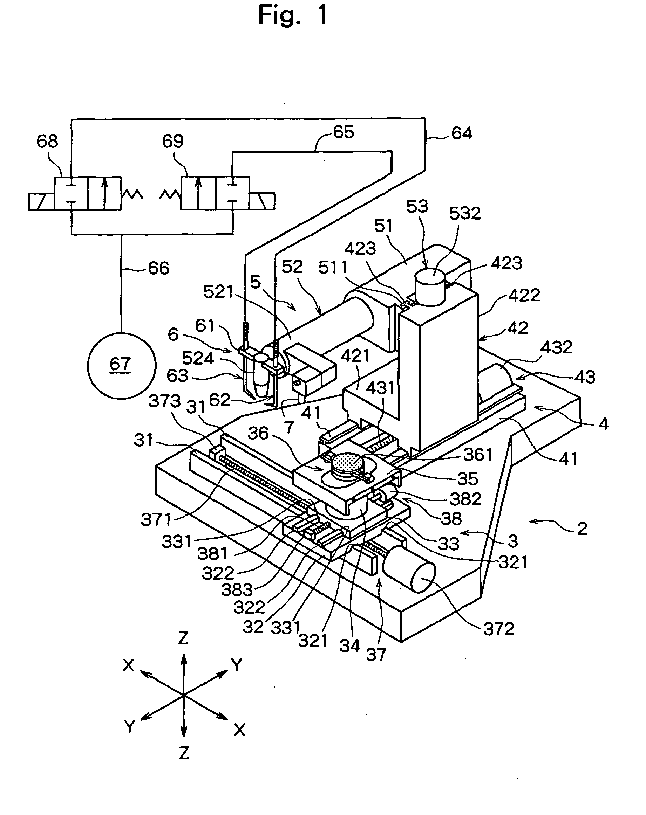

FIG. 1 shows a perspective view of the laser machining apparatus according to the present invention. The laser machining apparatus shown in FIG. 1 comprises a stationary base 2; a chuck table mechanism 3, disposed on the stationary base 2 so as to be movable in a machining feed direction indicated by arrows X, for holding a workpiece; a laser beam shining unit support mechanism 4 disposed on the stationary base 2 so as to be movable in an index feed direction indicated by arrows Y which is perpendicular to the direction indicated by the arrows X; and a laser beam shining unit 5 disposed on the laser beam shining unit support mechanism 4 so as to be movable in a direction indicated by arrows Z.

The chuck table mechanism 3 comprises a pair of guide rails 31, 31 disposed parallel on the stationary base 2 along the machining feed direction indicated by the arrows X; a first slide block 32 disposed on the guide rails 31, 31 so as to be movable in the machining feed direction indicated by the arrows X; a second slide block 33 disposed on the first slide block 32 so as to be movable in the index feed direction indicated by the arrows Y; a support table 35 supported on the second slide block 33 by a cylindrical member 34; and a chuck table 36 as workpiece holding means. This chuck table 36 has an attraction chuck 361 formed from a porous material, and is adapted to hold, for example, a disk-shaped semiconductor wafer, which is a workpiece, on the attraction chuck 361 by suction means (not shown). The chuck table 36 is rotated by a pulse motor (not shown) disposed within the cylindrical member 34.

The first slide block 32 has, on its lower surface, a pair of guided grooves 321, 321 to be fitted onto the pair of guide rails 31, 31, and has, on its upper surface, a pair of guide rails 322, 322 formed parallel along the index feed direction indicated by the arrows Y. The so constituted first slide block 32 has the guided grooves 321, 321 fitted onto the pair of guide rails 31, 31, whereby the first slide block 32 is movable along the pair of guide rails 31, 31 in the machining feed direction indicated by the arrows X. The chuck table mechanism 3 in the illustrated embodiment has machining feed means 37 for moving the first slide block 32 along the pair of guide rails 31, 31 in the machining feed direction indicated by the arrows X. The machining feed means 37 includes an externally threaded rod 371 disposed between and parallel to the pair of guide rails 31 and 31, and a drive source, such as a pulse motor 372, for rotationally driving the externally threaded rod 371. The externally threaded rod 371 has one end rotatably supported by a bearing block 373 fixed to the stationary base 2, and has the other end drivingly connected to an output shaft of the pulse motor 372 via a reduction gear (not shown). The externally threaded rod 371 is screwed to an internally threaded through-hole formed in an internal thread block (not shown) provided projectingly on the lower surface of a central portion of the first slide block 32. Thus, the externally threaded rod 371 is driven normally and reversely rotationally by the pulse motor 372, whereby the first slide block 32 is moved along the guide rails 31, 31 in the machining feed direction indicated by the arrows X.

The second slide block 33 has, on its lower surface, a pair of guided grooves 331, 331 to be fitted onto the pair of guide rails 322, 322 provided on the upper surface of the first slide block 32. The guided grooves 331, 331 are fitted onto the pair of guide rails 322, 322, whereby the second slide block 33 is movable in the index feed direction indicated by the arrows Y. The chuck table mechanism 3 in the illustrated embodiment has index feed means 38 for moving the second slide block 33 along the pair of guide rails 322, 322, which are provided on the first slide block 32, in the index feed direction indicated by the arrows Y. The index feed means 38 includes an externally threaded rod 381 disposed between and parallel to the pair of guide rails 322 and 322, and drive source, such as a pulse motor 382, for rotationally driving the externally threaded rod 381. The externally threaded rod 381 has one end rotatably supported by a bearing block 383 fixed to the upper surface of the first slide block 32, and has the other end drivingly connected to an output shaft of the pulse motor 382 via a reduction gear (not shown). The externally threaded rod 381 is screwed to an internally threaded through-hole formed in an internal thread block (not shown) provided projectingly on the lower surface of a central portion of the second slide block 33. Thus, the externally threaded rod 381 is driven normally and reversely rotationally by the pulse motor 382, whereby the second slide block 33 is moved along the guide rails 322, 322 in the index feed direction indicated by the arrows Y.

The laser beam shining unit support mechanism 4 has a pair of guide rails 41, 41 disposed parallel on the stationary base 2 along the index feed direction indicated by the arrows Y, and a moving support base 42 disposed on the guide rails 41, 41 so as to be movable in the index feed direction indicated by the arrows Y. The moving support base 42 comprises a moving support portion 421 disposed movably on the guide rails 41, 41, and a mounting portion 422 attached to the moving support portion 421. The mounting portion 422 has, on its side surface, a pair of guide rails 423, 423 provided parallel and extending in the direction indicated by the arrows Z. The laser beam shining unit support mechanism 4 in the illustrated embodiment has index feed means 43 for moving the moving support base 42 along the pair of guide rails 41, 41 in the index feed direction indicated by the arrows Y. The index feed means 43 includes an externally threaded rod 431 disposed between and parallel to the pair of guide rails 41 and 41, and a drive source, such as a pulse motor 432, for rotationally driving the externally threaded rod 431. The externally threaded rod 431 has one end rotatably supported by a bearing block (not shown) fixed to the stationary base 2, and has the other end drivingly connected to an output shaft of the pulse motor 432 via a reduction gear (not shown). The externally threaded rod 431 is screwed to an internally threaded hole formed in an internal thread block (not shown) provided projectingly on the lower surface of a central portion of the moving support portion 421 which constitutes the moving support base 42. Thus, the externally threaded rod 431 is driven normally and reversely rotationally by the pulse motor 432, whereby the moving support base 42 is moved along the guide rails 41, 41 in the index feed direction indicated by the arrows Y.

The laser beam shining unit 5 in the illustrated embodiment is equipped with a unit holder 51, and laser beam shining means 52 attached to the unit holder 51. The unit holder 51 has pair of guided grooves 511, 511 to be slidably fitted onto the pair of guide rails 423, 423 provided on the mounting portion 422. The guided grooves 511, 511 are fitted onto the pair of guide rails 423, 423, whereby the unit holder 51 is supported so as to be movable in the direction indicated by the arrows Z.

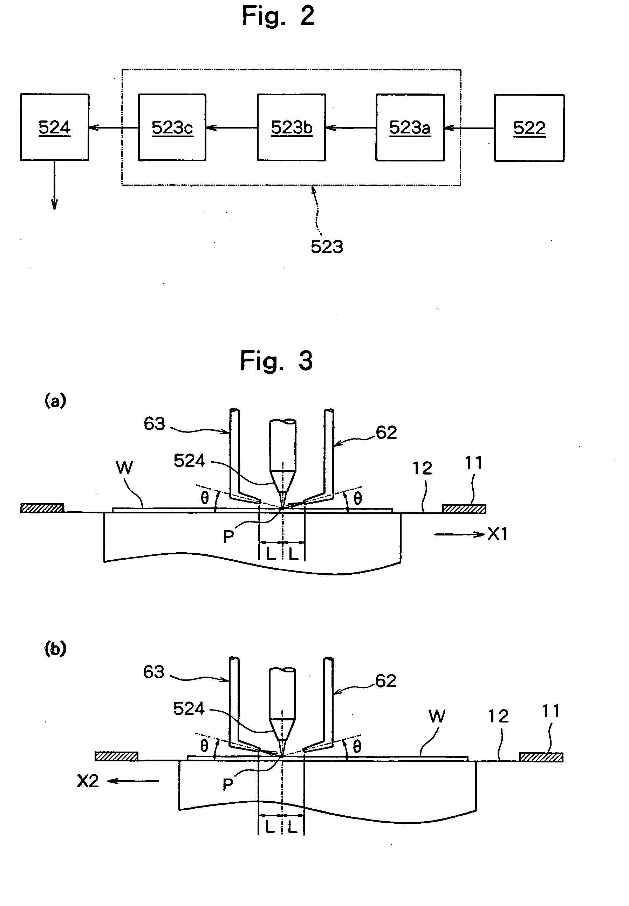

The illustrated laser beam shining means 52 includes a casing 521 of a cylindrical shape fixed to the unit holder 51 and extending substantially horizontally. Within the casing 521, laser beam oscillation means 522 and laser beam modulation means 523 are disposed as in FIG. 2. As the laser beam oscillation means 522, a YAG laser oscillator or a YVO4 laser oscillator can be used. The laser beam modulation means 523 includes pulse repetition frequency setting means 523a, laser beam pulse width setting means 523b, and laser beam wavelength setting means 523c. The pulse repetition frequency setting means 523a, laser beam pulse width setting means 523b, and laser beam wavelength setting means 523c constituting the laser beam modulation means 523 may be of forms well known among people skilled in the art, and thus detailed explanations for their constitutions are omitted herein. An optical condenser 524, which may be of a well-known form per se, is mounted at the front end of the casing 521.

A laser beam oscillated by the laser beam oscillation means 522 arrives at the optical condenser 524 via the laser beam modulation means 523. In the laser beam modulation means 523, the pulse repetition frequency setting means 523a converts the laser beam into a pulse laser beam of a predetermined pulse repetition frequency, the laser beam pulse width setting means 523b sets the pulse width of the pulse laser beam at a predetermined width, and the laser beam wavelength setting means 523c sets the wavelength of the pulse laser beam at a predetermined value.

The laser machining apparatus in the illustrated embodiment is equipped with gas ejection means 6 for ejecting a gas toward the shining position of the laser beam shone by the laser beam shining means 52. The gas ejection means 6 has a pair of gas ejection nozzles, a first gas ejection nozzle 62 and a second gas ejection nozzle 63, mounted on a support member 61 attached to the case of the optical condenser 524. The first gas ejection nozzle 62 and the second gas ejection nozzle 63 are disposed on an upstream side and a downstream side in the machining feed direction indicated by the arrows X, and eject the gas toward a laser beam shining position (P) from both sides of the shining position (P) as shown in FIGS. 3(a) and 3(b). The gas ejection angle of the first gas ejection nozzle 62 and the second gas ejection nozzle 63, i.e. the angle (θ) which they form with the workpiece holding surface of the chuck table 36 as the workpiece holding means, as shown in FIGS. 3(a) and 3(b), is set at 15 degrees in the illustrated embodiment. This gas ejection angle (θ) is desirably set in the range of 5 to 45 degrees. The distance (L) between the ejection port of each of the first gas ejection nozzle 62 and the second gas ejection nozzle 63 and the laser beam shining position (P) is set at 20 mm in the illustrated embodiment. This distance (L) is desirably set in the range of 1 to 50 mm.

The above-mentioned first gas ejection nozzle 62 and second gas ejection nozzle 63 are connected to a gas supply source 67 via gas supply pipes 64, 65 and 66. Electromagnetic control valves 68 and 69 are disposed in the gas supply pipes 64 and 65, respectively. These electromagnetic control valves 68, 69 are adapted to cut off communication when deenergized (OFF), and establish communication when energized (ON), and they are controlled by a control means (not shown). The gas from the gas supply source 67 is preferably an inert gas such as a nitrogen gas, a carbon dioxide gas, or an argon gas. Alternatively, air may be used as the gas. The pressure of the gas supply source 67 is desirably 0.2 MPa or more.

The laser machining apparatus in the illustrated embodiment is equipped with imaging means 7 disposed at a front end portion of the casing 521 constituting the laser beam shining means 52. The imaging means 7 includes an illumination means, an optical means, and an imaging device (CCD), and sends image signals, obtained thereby, to control means (not shown).

The laser beam shining unit 5 in the illustrated embodiment has moving means 53 for moving the unit holder 51 along the pair of guide rails 423, 423 in the direction indicated by the arrows Z. The moving means 53, like the aforementioned respective moving means, includes an externally threaded rod (not shown) disposed between the pair of rails 423 and 423, and a drive source, such as a pulse motor 532, for rotationally driving the externally threaded rod. The externally threaded rod (not shown) is driven normally and reversely rotationally by the pulse motor 532, whereby the unit holder 51 and the laser beam shining means 52 are moved along the guide rails 423, 423 in the direction indicated by the arrows Z.

Next, an explanation will be offered for a machining method for dividing a semiconductor wafer, as a workpiece, into individual semiconductor chips by use of the above-described laser machining apparatus.

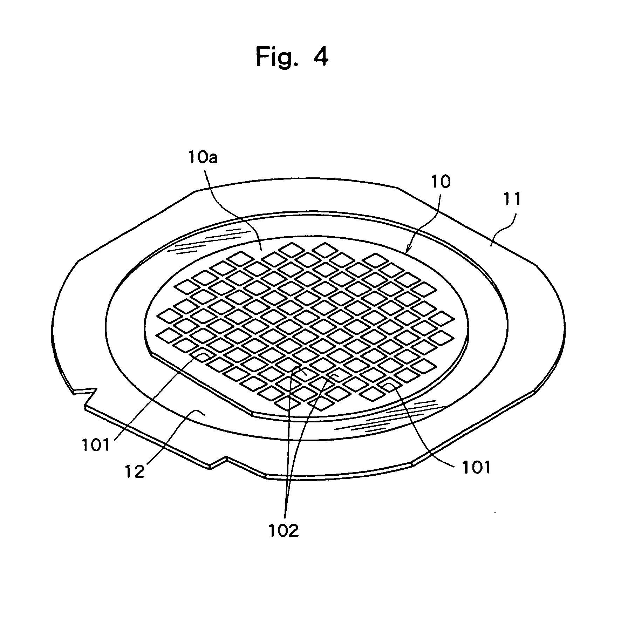

FIG. 4 shows a semiconductor wafer to be divided into individual semiconductor chips by the laser machining method according to the present invention. A semiconductor wafer 10 shown in FIG. 4 has a plurality of regions demarcated by a plurality of streets (cutting lines) 101 arranged in a lattice pattern on a face 10a, and a circuit 102, such as IC or LSI, is formed in each of the demarcated regions. The semiconductor wafer 10 has a back stuck to a protective tape 12 mounted on an annular frame 11, with the face 10a directed upward. The semiconductor wafer 10 supported on the annular frame 11 via the protective tape 12 is transported onto the workpiece holding surface, which is the upper surface of the attraction chuck 361 of the chuck table 36 constituting the chuck table mechanism 3 of the laser machining apparatus shown in FIG. 1, with the face 10a being pointed upward. This semiconductor wafer 10 is held under suction by the attraction chuck 361. The chuck table 36, which has held the semiconductor wafer 10 by suction in this manner, is moved along the guide rails 31, 31 by the action of the machining feed means 37, and is positioned directly below the imaging means 7 disposed on the laser beam shining unit 5.

When the chuck table 36 has been positioned directly below the imaging means 7, image processing, such as pattern matching, is carried out by the imaging means 7 and control means (not shown) for bringing the street 101, which is formed in a predetermined direction on the semiconductor wafer 10, into alignment with the optical condenser 524 of the laser beam shining unit 5, which shines a laser beam along the street 101. By this measure, alignment of the laser beam shining position is performed. For the street 101 formed on the semiconductor wafer 10 and extending perpendicularly to the above predetermined direction, alignment of the laser beam shining position is performed similarly.

When the street 101 formed in the semiconductor wafer 10 held on the chuck table 36 has been detected, and alignment of the laser beam shining position has been performed in the foregoing manner, the chuck table 36 is moved into a laser beam shining area where the optical condenser 524 of the laser beam shining unit 5 for shining a laser beam is located. As shown in FIG. 3(a), the chuck table 36, i.e. the semiconductor wafer 10, is machining-fed in a machining feed direction indicated by an arrow X1. During this action, a laser beam is shone along the street 101 of the semiconductor wafer 10 by the optical condenser 524 of the laser beam shining unit 5. On this occasion, the electromagnetic control valve 68 of the gas ejection means 6 is energized (rendered ON). As a result, the gas is ejected toward the laser beam shining position (P) from the gas supply source 67 through the gas supply pipe 66, the electromagnetic control valve 68, the gas supply pipe 64, and the first gas ejection nozzle 62. This means, as noted above, the gas being ejected from the first gas ejection nozzle 62 is ejected toward the laser beam shining position (P) from a downstream side of the chuck table 36 in the moving direction indicated by the arrow X1, namely, the side where the semiconductor wafer 10 has been machined by the laser beam.

As the laser beam shone by the laser beam shining unit 5, an ultraviolet laser beam indicated below can be used.
Light source: YAG laser or YVO4 laser
Wavelength: 355 nm
Output: 4 to 10 W
Pulse repetition frequency: 10 to 100 kHz
Pulse width: 10 to 50 ns
Diameter of focused spot: 10 to 50 µm

By performing the above-described laser machining for dividing, the semiconductor wafer 10 is divided along the street 101, with a cutting groove or separating groove about 10 µm wide being formed. At this time, debris occurs upon shining of the laser beam, but this debris is immediately cooled and blown away by the gas, which has been ejected toward the laser beam shining position (P) from the side machined by the laser beam, whereby the debris becomes dust. Thus, the generated debris does not adhere firmly to the face of the semiconductor wafer 10. Moreover, the gas is ejected toward the laser beam shining position (P) from the side machined by the laser beam, so that the dust formed from the debris cooled and blown away by the gas does not enter the cutting groove. Thus, the face of the semiconductor wafer 10 after laser machining for dividing is subjected to spinner cleaning using a 2-fluid nozzle which is carried out in the machining field of the art (for example, pressure of cleaning water: 0.2 MPa, amount of cleaning water: 100 to 200 cc/min, pressure of air: 0.4 MPa, rotational speed of the spinner table: 400 rpm). This cleaning can easily remove dust setting on the face of the semiconductor wafer 10, namely, dust formed by the cooling and blowoff of debris by the gas. Assume that, in contrast to this mode of the present invention, the gas is ejected to the laser beam shining position from the side which has not been machined by the laser beam, namely, the upstream side in the moving direction of the semiconductor wafer as the workpiece. In this case, debris adheres to the face of the semiconductor wafer, nearly as in a case where no gas is ejected, and the debris cannot be removed even by spinner cleaning. This has been confirmed by experiments conducted by the present inventor.

After the laser machining for dividing has been performed along the predetermined street in the above manner, the chuck table 36, accordingly the semiconductor wafer 10 held thereby, is index-fed by the spacing between the streets in the direction indicated by the arrows Y, and then the above-mentioned laser machining for dividing is performed. If the laser machining for dividing is to be carried out during the reciprocating movement of the chuck table 36, the chuck table 36, i.e. the semiconductor wafer 10, is moved in a machining feed direction indicated by an arrow X2, as shown in FIG. 3(b). During this action, a laser beam is shone along the street 101 of the semiconductor wafer 10 by the optical condenser 524 of the laser beam shining unit 5. On this occasion, the electromagnetic control valve 69 of the gas ejection means 6 is energized (rendered ON). As a result, the gas is ejected toward the laser beam shining position (P) from the gas supply source 67 through the gas supply pipe 66, the electromagnetic control valve 69, the gas supply pipe 65, and the second gas ejection nozzle 63. This means, as noted above, the gas being ejected from the second gas ejection nozzle 63 is ejected toward the laser beam shining position (P) from a downstream side of the chuck table 36 in the moving direction indicated by the arrow X2, namely, the side where the semiconductor wafer 10 has been machined by the laser beam. Thus, the machining feed of the chuck table 36, i.e. the semiconductor wafer 10, in the direction indicated by the arrow X2, as shown in FIG. 3(b), produces the same action and effect as those obtained by the machining feed of the chuck table 36, i.e. the semiconductor wafer 10, in the direction indicated by the arrow X1, as shown in FIG. 3(a).

After completion of the laser beam shining step and the indexing step along all the streets extending in the predetermined direction, the chuck table 36, accordingly the semiconductor wafer 10 held thereby, is turned 90 degrees. Then, the above-described laser machining for dividing and the indexing feed are carried out along the streets extending perpendicularly to the aforementioned predetermined direction. By this procedure, the semiconductor wafer 10 is divided or separated into individual semiconductor chips. After the semiconductor wafer 10 has been divided or separated into the individual semiconductor chips, the chuck table 36 holding the semiconductor wafer 10 is returned to the position where the chuck table 36 initially held the semiconductor wafer 10 by suction. At this position, the chuck table 36 releases the suction holding of the semiconductor wafer 10. Then, the semiconductor wafer 10 is transported to a cleaning step, the subsequent step, by transport means (not shown).

As noted above, the present invention has been described based on the illustrated embodiments, but the invention is not limited to these embodiments alone. For example, the aforementioned embodiments present the example in which the chuck table, i.e. the workpiece, is moved relative to the laser beam shining means. However, the laser beam shining means may be moved relative to the chuck table, i.e. the workpiece. Moreover, the aforementioned embodiments present the example in which the gas ejection means has a pair of gas ejection nozzles. However, a single gas ejection nozzle may be provided, if the machining feed is performed in one direction only.

In the present invention, the gas is ejected toward the laser beam shining position from the side machined by the laser beam during shining of the laser beam. Thus, debris, which occurs upon shining of the laser beam, is immediately cooled and blown away by the gas, whereby the debris becomes dust. Hence, the generated debris does not adhere firmly to the face of the workpiece. Moreover, dust formed from the debris cooled and blown away by the gas does not enter the cutting groove. Thus, dust settling on the face of the workpiece as a result of the cooling and blowoff of debris by the gas can be easily removed by cleaning the face of the workpiece after laser machining for dividing.

## Claims

1. A laser machining method for machining a workpiece by shining a laser beam to said workpiece from laser beam shining means (5), said method comprising the steps of:
a) holding the workpiece in a workpiece holding means (36);
b) shining the laser beam onto said workpiece;
c) moving the workpiece holding means (36) relative to said laser beam shining means (5); and
d) ejecting a gas toward a shining position of the laser beam during laser beam shining,
**characterized in that** the method comprises the further steps of:
e) ejecting the gas from a first nozzle (62) located downstream from the shining position of the laser beam in the direction of movement of said workpiece holding means (36) during the laser beam shining;
f) reversing the direction of movement of the workpiece holding means (36); and
ejecting a gas from a second nozzle (63) located downstream from the shining position of the laser beam in the reversed direction of movement of said workpiece holding means (36).

2. A laser machining apparatus comprising workpiece holding means (36) for holding a workpiece, laser beam shining means (5) for shining a laser beam to said workpiece held by said workpiece holding means (36), machining feed means (37) for moving said workpiece holding means (36) relative to said laser beam shining means (5),and gas ejection means (6) for ejecting a gas toward a shining position of the laser beam during laser beam shining,
**characterized in that** the gas ejection means (6) ejects the gas from a side, which has been machined by the laser beam, **in that** said gas ejection means (6) is equipped with a pair of gas ejection nozzles (62, 63) for ejecting the gas toward said shining position, the gas ejection nozzles (62, 63) being positioned from sides downstream and upstream from said shining position in a direction of movement of said workpiece holding means (36), and **in that** said gas ejection means (6) ejects the gas from one of said gas ejection nozzles (62, 63), being the gas ejection nozzle (62, 63) located downstream from said shining position in the direction of movement of said workpiece holding means (36) during the laser beam shining.

## Patentansprüche

1. Ein Laserbearbeitungsverfahren zur Bearbeitung eines Werkstückes durch Einstrahlen eines Laserstrahls auf das Werkstück von einem Laserstrahlbeleuchtungsmittel (5), wobei dieses Verfahren die Schritte enthält:
a) Halten des Werkstückes in einem Werkstückhaltemittel (36);
b) Einstrahlen des Laserstrahls auf das Werkstück;
c) Bewegen des Werkstückhaltemittels (36) relativ zu dem Laserstrahlbeleuchtungsmittel (5); und
d) Ausstoßen eines Gases in Richtung einer Einstrahlposition des Laserstrahls während der Laserstrahlbeleuchtung,
**dadurch gekennzeichnet, dass** das Verfahren die weiteren Schritte enthält:
e) Ausstoßen des Gases aus einer ersten Düse (62), die stromabwärts von der Beleuchtungsposition des Laserstrahls in der Bewegungsrichtung des Werkstückhaltemittels (36) angeordnet ist, während der Laserstrahlbeleuchtung;
f) Umkehren der Bewegungsrichtung des Werkstückhaltemittels (36) und
Ausstoßen eines Gases aus einer zweiten Düse (63), die stromabwärts von der Beleuchtungsposition des Laserstrahls in der umgekehrten Bewegungsrichtung des Werkstückhaltemittels (36) angeordnet ist.

2. Eine Laserbearbeitungsvorrichtung umfassend ein Werkstückhaltemittel (36) zum Halten eines Werkstückes, ein Laserstrahlbeleuchtungsmittel (5) zum Einstrahlen eines Laserstrahls auf das Werkstück, das durch das Werkstückhaltemittel (36) gehalten wird, Bearbeitungsvorschubmittel (37) um das Werkstückhaltemittel (36) relativ zu dem Laserstrahlbeleuchtungsmittel (5) zu bewegen und Gasausstoßmittel (6) zum Ausstoßen eines Gases in Richtung einer Beleuchtungsposition des Laserstrahls während einer Laserstrahlbeleuchtung, **dadurch gekennzeichnet, dass** das Gasausstoßmittel (6) das Gas von einer Seite ausstößt, die durch den Laserstrahl bearbeitet worden ist, dass das Gasausstoßmittel (6) mit einem Paar Gasausstoßdüsen (62, 63) zum Ausstoßen des Gases in Richtung der Beleuchtungsposition ausgerüstet ist, wobei die Gasausstoßdüsen (62, 63) auf Seiten stromabwärts und stromaufwärts von der Beleuchtungsposition in einer Bewegungsrichtung des Werkstückhaltemittels (36) positioniert sind, und dass das Gasausstoßmittel (6) das Gas durch eine der Gasausstoßdüsen (62, 63) ausstößt, wobei die Gasausstoßdüse (62, 63) stromabwärts von der Beleuchtungsposition in einer Bewegungsrichtung des Werkstückhaltemittels (36) während der Laserstrahlbeleuchtung angeordnet ist.

## Revendications

1. Procédé d'usinage laser permettant d'usiner une pièce en illuminant ladite pièce par un faisceau laser à l'aide d'un moyen d'illumination par faisceau laser (5), ledit procédé comprenant les étapes consistant à :
a) maintenir la pièce dans un moyen d'immobilisation de pièce (36) ;
b) illuminer ladite pièce avec le faisceau laser ;
c) déplacer le moyen d'immobilisation de pièce (36) par rapport au dit moyen d'illumination par faisceau laser (5) ; et
d) éjecter un gaz vers une position d'illumination du faisceau laser pendant l'illumination par faisceau laser,
**caractérisé en ce que** le procédé comprend les opérations supplémentaires consistant à :
e) éjecter le gaz par une première buse (62) située en aval de la position d'illumination du faisceau laser dans le sens de déplacement du dit moyen d'immobilisation de pièce (36) pendant l'illumination par faisceau laser ;
f) inverser le sens de déplacement du moyen d'immobilisation de pièce (36) ; et
éjecter un gaz par une deuxième buse (63) située en aval de la position d'illumination du faisceau laser dans le sens inverse du déplacement du dit moyen d'immobilisation de pièce (36).

2. Appareil d'usinage laser comprenant un moyen d'immobilisation de pièce (36) destiné à immobiliser une pièce, un moyen d'illumination par faisceau laser (5) destiné à illuminer par faisceau laser ladite pièce maintenue par ledit moyen d'immobilisation de pièce (36), un moyen d'avance d'usinage (37) destiné à déplacer ledit moyen d'immobilisation de pièce (36) par rapport au dit moyen d'illumination par faisceau laser (5) et un moyen d'éjection de gaz (6) destiné à éjecter un gaz vers une position d'illumination du faisceau laser pendant l'illumination par faisceau laser,
**caractérisé en ce que** le moyen d'éjection de gaz (6) éjecte le gaz à partir d'un côté qui a été usiné par le faisceau laser, et **en ce que** ledit moyen d'éjection de gaz (6) est équipé d'une paire de buses d'éjection de gaz (62, 63) destinées à éjecter le gaz vers ladite position d'illumination, les buses d'éjection de gaz (62, 63) étant positionnées en aval et en amont de ladite position d'illumination dans le sens de déplacement du dit moyen d'immobilisation de pièce (36), et **en ce que** ledit moyen d'éjection de gaz (6) éjecte le gaz à partir de l'une des buses d'éjection de gaz (62, 63), les buses d'éjection de gaz (62, 63) étant situées en aval de ladite position d'illumination dans le sens de déplacement du dit moyen d'immobilisation de pièce (36) pendant l'illumination par faisceau laser.
